# FASCICULE DE BREVET EUROPEEN

(11) **EP 0 320 330 B1**
(45) Date de publication et mention de la délivrance du brevet: **18.08.1993**
(21) Numéro de dépôt: 88402956.2
(22) Date de dépôt: 24.11.1988
(51) Int. Cl.: F02M 69/08, F02M 67/02

(54) **Dispositif d'injection pneumatique de carburant dans un cylindre d'un moteur à combustion interne**
Vorrichtung zur pneumatischen Einspritzung von Brennstoff in einen Zylinder einer Brennkraftmaschine
Device for injecting fuel pneumatically in a cylinder of an internal combustion engine

(30) Priorité: 27.11.1987 FR 8716613
(43) Date de publication de la demande: 14.06.1989
(73) Titulaire: INSTITUT FRANCAIS DU PETROLE, 92502 Rueil-Malmaison (FR); AUTOMOBILES PEUGEOT, 75116 Paris (FR); AUTOMOBILES CITROEN, 92200 Neuilly-sur-Seine (FR)
(72) Inventeur: Duret, Pierre, F-75009 Paris (FR)

(56) Documents cités:
- EP-A- 0 189 714
- EP-A- 0 189 715
- US-A- 4 519 370

## Description

L'invention concerne un dispositif d'injection pneumatique de carburant dans un cylindre d'un moteur à combustion interne à deux temps.

On connaît, par exemple par le document EP-A-0.189.714, des moteurs à deux temps à un ou plusieurs cylindres comportant, associé à chacun des cylindres, un dispositif d'injection pneumatique de carburant réalisant la pulvérisation d'un carburant liquide par un gaz sous pression qui est généralement de l'air comprimé et l'introduction du mélange carburé obtenu dans le cylindre du moteur. L'alimentation et le balayage du cylindre par de l'air frais sont réalisés indépendamment de l'injection pneumatique de carburant qui est déclenchée à un instant déterminé du cycle de fonctionnement du moteur.

Le dispositif d'injection pneumatique de carburant comporte une chambre qui peut être mise en communication avec la chambre intérieure du cylindre par l'intermédiaire d'au moins une soupape commandée par une came. La chambre d'injection est alimentée en gaz sous pression qui peut provenir soit d'un réservoir auxiliaire soit d'une partie du moteur produisant ce gaz sous pression.

En particulier, on a proposé d'alimenter le dispositif d'injection en air comprimé à partir d'une capacité dont le rechargement est effectué par le carter pompe assurant l'alimentation et le balayage en air frais du cylindre du moteur.

Dans le cas de moteurs de grande puissance, les quantités de carburant injecté dans le cylindre sont très importantes et nécessitent soit une levée de grande amplitude de la soupape mettant en communication la chambre d'injection avec le cylindre, soit l'utilisation d'une soupape de grand diamètre. Par moteur de grande puissance, on entend notamment, des moteurs fournissant plus de 25 à 30 kilowatt par cylindre.

Dans le cas des très gros moteurs, il n'est plus possible d'augmenter le diamètre des soupapes au-delà d'une certaine limite, l'inertie de la soupape devenant alors excessive. De même, il n'est pas possible d'augmenter l'amplitude ou le temps de levée au-delà d'une certaine limite.

Dans le cas de gros moteurs, on a proposé de dédoubler le dispositif d'injection de chacun des cylindres en utilisant deux soupapes et deux injecteurs de carburant liquide par cylindre. Les inconvénients de cette solution sont cependant que le prix de revient du moteur est considérablement accru et que son réglage est délicat.

Dans le domaine de l'injection de carburant, le document US-4.519.370 décrit un dispositif d'injection de carburant dans un cylindre d'un moteur, comportant une chambre d'injection mise en communication avec la chambre intérieure du cylindre par l'intermédiaire de deux orifices, chacun associé à une soupape. La chambre est alimentée en gaz par un conduit et en carburant liquide par un injecteur de liquide débouchant dans la chambre d'injection et comportant deux canaux de sortie dirigés chacun vers un des orifices de la chambre d'injection.

Le but de l'invention est de proposer un dispositif d'injection pneumatique de carburant dans un cylindre d'un moteur à combustion interne, notamment de grande puissance et susceptible d'introduire dans la chambre du cylindre de grandes quantités de carburant, tout en étant d'une structure simple et d'un prix de revient faible permettant de simplifier le réglage du moteur.

Dans ce but, le dispositif selon l'invention présente une chambre d'injection alimentée en gaz sous pression et communique avec la chambre intérieure du cylindre par deux orifices associés chacun à une soupape ; la chambre étant alimentée en carburant par un injecteur à deux canaux de sortie orientés chacun vers un orifice de la chambre.

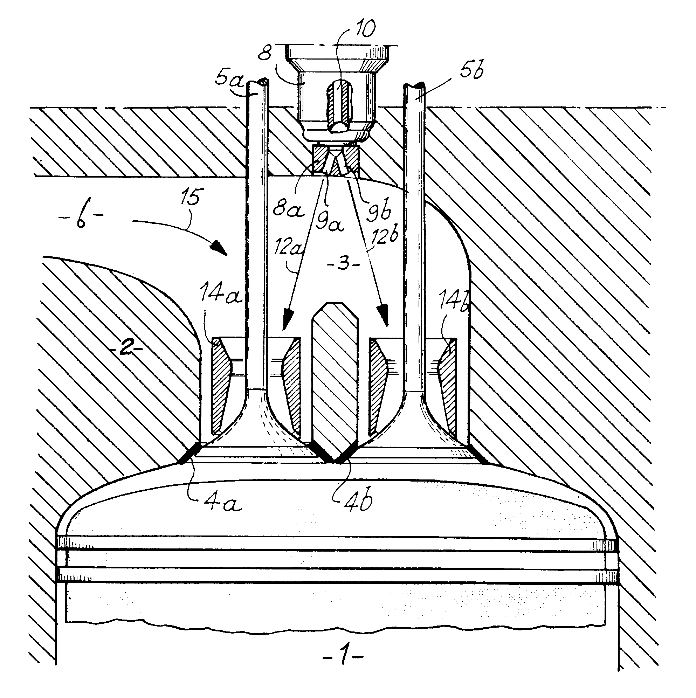

Afin de bien faire comprendre l'invention, on va maintenant décrire, à titre d'exemple non limitatif, en se référant à la figure jointe en annexe, un mode de réalisation d'un dispositif d'injection suivant l'invention d'un moteur à deux temps.

La figure unique est une vue en coupe de la chambre du dispositif d'injection communiquant avec la partie supérieure d'un cylindre d'un moteur à deux temps.

Sur la figure, on voit la partie supérieure de la chambre d'un cylindre 1 d'un moteur à deux temps qui est recouverte et délimitée par une culasse 2 dans laquelle est usinée la chambre 3 d'un dispositif d'injection. La chambre 3 débouche à l'intérieur du cylindre 1, au niveau de deux ouvertures circulaires 4a et 4b par lesquelles on réalise l'injection du mélange carburant. La culasse est usinée et revêtue au niveau des ouvertures 4a et 4b, de façon à constituer deux sièges sur lesquels viennent s'appuyer les têtes de deux soupapes 5a et 5b respectivement. Le soupapes 5a et 5b comportent des tiges montées coulissantes dans la culasse 2 et associées à leur extrémité avec un dispositif de commande à came et à ressort permettant l'ouverture et la fermeture des soupapes 5a et 5b à des instants déterminés du cycle de fonctionnement du moteur.

Le dispositif de commande réalise l'ouverture et la fermeture simultanées des soupapes 5a et 5b.

La culasse est usinée pour constituer un canal 6 débouchant dans la chambre 3 pour alimenter cette chambre d'injection 3 en gaz sous pression.

De manière préférentielle, la canal 6 est relié à une capacité dans laquelle on réalise un stockage d'air comprimé, par exemple à partir du carter pompe communiquant avec l'extrémité inférieure du cylindre 1 et assurant l'alimentation et le balayage en air frais du cylindre par un ou plusieurs conduits de transfert.

Un injecteur de carburant liquide 8 est monté à l'intérieur de la culasse de façon que sa buse de sortie 8a débouche à la partie supérieure de la chambre d'injection 3. L'injecteur 8 est un injecteur à deux jets dont la buse de sortie 8a comporte deux canaux 9a et 9b également inclinés par rapport à la verticale et alimentés à partir d'un canal unique 10.

Lorsque l'injecteur 8 est en fonctionnement, comme représenté sur la figure, deux jets 12a et 12b de carburant liquide sont dirigés simultanément vers les ouvertures 4a et 4b respectivement.

Des buses 14a et 14b sont disposées à la partie inférieure de la chambre d'injection 3, au niveau des ouvertures 4a et 4b respectivement. Ces buses 14a et 14b peuvent être constituées de manière avantageuse par des venturis. Les jets 12a et 12b sont dirigés de manière à parvenir dans la zone des ouvertures 4a et 4b, à la partie inférieure de la chambre d'injection 3, par l'intermédiaire des buses 14a et 14b.

Au moment de l'ouverture simultanée des soupapes 5a et 5b, l'air sous pression admis par le canal 6 dans la chambre 3 (flèche 15) pénètre dans cette chambre à grande vitesse, la pression dans le cylindre étant, au moment de l'injection pneumatique, très inférieure à la pression de l'air comprimé dans la capacité reliée au canal 6. L'air comprimé pénètre dans les buses 14a et 14b où il est encore accéléré et réalise la pulvérisation du carburant liquide introduit dans la chambre 3, par l'injecteur 8, sous la forme des jets 12a et 12b. L'air comprimé contenant les gouttelettes de carburant pulvérisé en suspension pénètre dans la chambre du cylindre 1 où il se mélange à l'air frais de balayage introduit dans le cylindre par un moyen indépendant du dispositif d'injection pneumatique.

Pendant l'injection, les soupapes 5a et 5b sont ouvertes simultanément, leur tête respective étant éloingnée des sièges entourant les ouvertures 4a et 4b. La section de passage du carburant en suspension dans l'air comprimé est alors double de la section de passage découverte par l'une quelconque des deux soupapes. Au moment de la fermeture, les deux têtes de soupape viennent s'appliquer contre les sièges entourant les ouvertures 4a et 4b respectivement pour réaliser la fermeture simultanée des deux passages de communication entre la chambre d'injection 3 et la chambre du cylindre 1. La manoeuvre simultanée des soupapes 5a et 5b peut être réalisée en utilisant une seule came ou deux cames parfaitement synchronisée. Les soupapes 5a et 5b de taille identique pourront ainsi découvrir, lors de leur ouverture, un passage de section importante pour le carburant en suspension dans l'air comprimé, tout en ayant des têtes dont le diamètre est limité. Chacune des soupapes présente ainsi une masse et une inertie limitées, ce qui est favorable pour le fonctionnement du moteur à haut régime.

D'autre part, l'injecteur 8 introduit dans la chambre 3, au niveau des venturis 14a et 14b, sous forme de deux jets identiques 12a et 12b, une quantité double de carburant liquide par rapport à celle qui serait introduite par un seul injecteur associé à une seule soupape telle que 5a ou 5b. Les jets 12a et 12b provenant des canaux 9a et 9b de section identique alimentés à partir d'un canal unique 10 présentent des débit et vitesse parfaitement identiques. Le réglage du dispositif d'injection est donc particulièrement simple puisque ce dispositif d'injection comporte deux ensembles identiques fonctionnant simultanément pour l'introduction de quantités égales de carburant.

On peut ainsi introduire dans la chambre du cylindre des quantités de carburant importantes sans utilise des soupapes surdimensionnées et un ensemble d'injection exigeant un réglage complexe.

L'invention ne se limite pas au mode de réalisation qui a été décrit.

C'est ainsi qu'il est possible d'équiper au moins l'une des deux ouvertures d'admission de carburant 4a et 4b d'un organe déflecteur du jet de mélange carburé, tel que décrit dans la demande de brevet 2.575.522 déposée conjointement par l'Institut Français du Pétrole et les Sociétés Automobiles Peugeot et Automobiles Citroën. Les organes déflecteurs du jet de mélange carburé peuvent être usinés chacun dans une pièce annulaire constituant également le siège de la soupape correspondante.

Selon un mode de réalisation particulièrement intéressant, chacune des deux ouvertures est munie d'un déflecteur. Chacun de ces déflecteurs pourra être orienté de manière à optimiser le balayage et la combustion dans le moteur. Ainsi, dans certains cas, les déflecteurs pourront orienter les jets dans des directions différentes. Par exemple, dans le cas d'un moteur deux temps comportant plusieurs lumières de transfert réparties de part et d'autre du plan axial médian du cylindre passant par la lumière d'échappement les déflecteurs pourront être orientés pour diriger les jets de part et d'autre du plan médian en direction des lumières de transfert.

Le dispositif d'injection pneumatique suivant l'invention peut être utilisé dans le cas de moteurs à combustion interne à deux temps à un ou plusieurs cylindres.

## Revendications

1. Dispositif d'injection de carburant dans un cylindre d'un moteur alternatif à deux temps à combustion interne comportant une chambre d'injection (3) qui est mise en communication avec la chambre intérieure du cylindre (1) par l'intermédiaire d'au moins un orifice débouchant dans la chambre du cylindre associé à une soupape (5a, 5b) commandée pour une injection à un instant déterminé du cycle de fonctionnement du moteur, la chambre d'injection (3) étant alimentée en gaz sous pression par un conduit (6) et en carburant liquide par l'intermédiaire d'au moins un injecteur de liquide (8) débouchant dans la chambre d'injection, l'injecteur (8) comportant un canal de sortie dirigé vers l'orifice de la chambre d'injection, le dispositif d'injection pneumatique ayant une buse réalisée sous forme de venturi (14a, 14b) disposé dans la chambre d'injection au niveau de l'orifice, le canal de sortie de l'injecteur étant dirigé vers la partie intérieure de la buse, l'air de balayage et l'air utilisé pour l'injection étant introduits indépendamment dans le cylindre, caractérisé en ce que la chambre d'injection (3) communique avec la chambre intérieure du cylindre (1) par deux orifices (4a, 4b) associés chacun à une soupape, (5a, 5b) et est alimentée en carburant par un injecteur à deux canaux de sortie (9a, 9b) orientés chacun vers un orifice de la chambre.

2. Dispositif d'injection suivant la revendication 1, caractérisé par le fait que les soupapes (5a, 5b) sont associées à des moyens de commande permettant leur ouverture et leur fermeture simultanées.

3. Dispositif d'injection suivant l'une quelconque des revendications 1 et 2, caractérisé par le fait que la chambre d'injection (3) et le conduit (6) d'alimentation de cette chambre en gaz sous pression sont usinés à l'intérieur d'une culasse (2) fermant la chambre du cylindre (1) à sa partie supérieure.

4. Dispositif d'injection suivant l'une des revendications précédentes, caractérisé en ce que l'un au moins desdits orifices débouchant dans la chambre du cylindre comporte un organe déflecteur du jet.

5. Dispositif selon la revendication 4, caractérisé en ce que chacun desdits orifices débouchant dans la chambre du cylindre comporte un organe déflecteur du jet.

6. Dispositif selon la revendication 5, caractérisé en ce que lesdits déflecteurs orientent les jets dans des directions différentes afin de mieux contrôler la répartition des jets dans ladite chambre du cylindre.

## Claims

1. Device for injecting fuel into a cylinder in a two-stroke reciprocating internal combustion engine including an injection chamber (3) which is put in communication with the internal chamber of the cylinder (1) by means of at least one orifice opening out into the cylinder chamber associated with a valve (5a, 5b) controlled so as to give injection at a given moment in the operating cycle of the engine, the injection chamber (3) being supplied with gas under pressure through a pipe (6) and with liquid fuel by means of at least one liquid injector (8) opening out into the injection chamber, the injector (8) having an outlet duct directed towards the orifice of the injection chamber, the pneumatic injection device having a nozzle designed in the form of a venturi (14a, 14b) disposed in the injection chamber at the orifice, the outlet duct from the injector being directed towards the internal part of the nozzle, the scavenging air and the air used for the injection being introduced into the cylinder independently, characterised in that the injection chamber (3) communicates with the internal chamber of the cylinder (1) through two orifices (4a, 4b) each associated with a valve (5a, 5b), and is supplied with fuel by an injector with two outlet ducts (9a, 9b) each oriented towards an orifice of the chamber.

2. Injection device according to Claim 1, characterised by the fact that the valves (5a, 5b) are associated with control means enabling them to be opened and closed simultaneously.

3. Injection device according to either one of Claims 1 and 2, characterised by the fact that the injection chamber (3) and the pipe (6) supplying this chamber with gas under pressure are machined inside a cylinder head (2) closing off the chamber of the cylinder (1) at its top part.

4. Injection device according to one of the preceding claims, characterised in that at least one of the said orifices opening out into the chamber of the cylinder has a device for deflecting the jet.

5. Device according to Claim 4, characterised in that each of the said orifices opening out into the chamber of the cylinder has a device for deflecting the jet.

6. Device according to Claim 5, characterised in that the said deflectors orient the jets in different directions in order better to control the distribution of the jets in the said chamber of the cylinder.

## Patentansprüche

1. Vorrichtung zum Einspritzen von Brennstoff in einen Zylinder einer Hubkolben-Zweitakt-Brennkraftmaschine mit einer Injektorkammer (3), die mit der Innenkammer des Zylinders (1) vermittels wenigstens einer Öffnung in Verbindung gesetzt ist, die in die Kammer des Zylinders zugeordnet zu einem Ventil (5a, 5b) mündet, das für eine Injektion zu einem bestimmten Augenblick des Arbeitszyklus des Motors gesteuert ist, wobei die Injektorkammer (3) mit Gas unter Druck über eine Leitung (6) und mit flüssigem Brennstoff vermittels wenigstens eines Flüssigkeitsinjektors (8) gespeist ist, der in die Injektorkammer mündet, wobei der Injektor (8) einen gegen die Öffnung der Injektionskammer gerichteten Austrittskanal umfaßt, die Vorrichtung zur pneumatischen Injektion eine in Form einer Venturidüse (14a, 14b) ausgebildete Düse hat, die in der Injektorkammer in Höhe der Öffnung angeordnet ist, wobei der Austrittskanal des Injektors gegen den Innenteil der Düse gerichtet ist, die Spülluft und die zur Injektion benötigte Luft unabhängig in den Zylinder eingeführt werden, **dadurch gekennzeichnet**, daß die Injektorkammer (3) mit der Innenkammer des Zylinders (1) über zwei Öffnungen (4a, 4b) in Verbindung steht, die je einem Ventil (5a, 5b) zugeordnet sind und mit Brennstoff über einen Injektor mit zwei Austrittskanälen (9a, 9b) gespeist ist, die je gegen eine Öffnung der Kammer gerichtet sind.

2. Einspritzvorrichtung nach Anspruch 1, dadurch gekennzeichnet, daß die Ventile (5a, 5b) Steuermitteln zugeorndet sind, die deren gleichzeitiges Öffnen und Schließen ermöglichen.

3. Einspritzvorrichtung nach einem der Ansprüche 1 und 2, dadurch gekennzeichnet, daß die Injektorkammer (3) und die Speiseleitung (6) dieser Kammer mit Gas unter Druck im Inneren eines Zylinderdeckels (2) ausgearbeitet sind, welcher die Kammer des Zylinders (1) in ihrem oberen Teil schließt.

4. Einspritzvorrichtung nach einem der vorhergehenden Ansprüche, dadurch gekennzeichnet, daß wenigstens eine dieser in die Kammer des Zylinders mündenden Öffnungen ein Strahldeflektororgan umfaßt.

5. Vorrichtung nach Anspruch 4, dadurch gekennzeichnet, daß jede dieser in die Kammer des Zylinders mündenden Öffnungen ein Strahlablenkorgan umfaßt.

6. Vorrichtung nach Anspruch 5, dadurch gekennzeichnet, daß diese Deflektoren die Strahlen in unterschiedlichen Richtungen orientieren, um besser die Verteilung der Strahlen in dieser Zylinderkammer zu regeln.
